(19)

**Europäisches Patentamt**

**European Patent Office**

**Office européen des brevets**

(11) **EP 2 608 205 A1**

(12) **EUROPEAN PATENT APPLICATION**

(43) Date of publication:
**26.06.2013 Bulletin 2013/26**

(51) Int Cl.:
***G11B 20/18*** *(2006.01)*

(21) Application number: **11306755.7**

(22) Date of filing: **22.12.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Thomson Licensing**
**92130 Issy-les-Moulineaux (FR)**

(72) Inventors:
• **Georgi, Marco**
**30855 Langenhagen (DE)**
• **Theis, Oliver**
**32689 Kalletal (DE)**

(74) Representative: **Schiller, Harald**
**Deutsche Thomson OHG**
**European Patent Operations**
**Karl-Wiechert-Allee 74**
**DE-30625 Hannover (DE)**

(54) **Method and system for reading data from a storage medium**

(57) The present invention relates to a method **(400)** for reading data from a storage medium. The method includes detecting **(414)** an error at a first location on the storage medium, and deriving **(416)** from the first location information relating to a second location on the storage medium, where the second location is physically close and logically distant from the first location. The method further includes converting **(418)** the information relating to the second location into erasure information; and utilizing **(408)** the erasure information during error correction decoding of the storage medium.

400
FIG. 4

**Description**

The present invention relates to the field of data storage systems. In particular, exemplary embodiments of the present invention relate to a method and system for generating erasure information utilized in error correction decoding of rotating storage mediums, of optical or magnetic type.

Optical disks have become a prevalent medium for storing digital data, such as audio, video or other computer files. Recording information on to the optical disks generally involves an encoding process, whereby light, e.g. a laser, illuminates the surface of the optical disk on which photo-reactive materials are disposed typically along a circular or spiral path. As the intensity of the light is modulated, the laser light patterns the photo reactive material so as to encode digital data bits, such as those comprising audio, video or other digital files. The encoded bits can be decoded or read back using a laser of lesser energy to illuminate the coded patterns for producing reflections from which the original data bits can be derived.

Magnetic data storage, too, exists in the form of rotating discs being written to and scanned on circular or spiral tracks.

As is well known, the surface of optical disks is delicate in nature and generally needs to be handled with care. However, over time, the surface of the disk may become compromised, as may happen when the disk is mishandled or is otherwise kept in less than ideal conditions. For instance, over time, a disk may acquire dust particles, finger prints, scratches and the like, causing its surface and/or its various layers to develop local defects. Such defects, also termed burst errors, can manifest as error bits in the stored data, which can compromise the encoded data and the overall contents of the disk, as may be noticed during disk readout.

Although it may be hard if not impossible to prevent optical disks from acquiring the above and/or other defects, many schemes have been implemented for correcting disk errors. Such schemes typically involve error correction coding (ECC) whereby, for example, the encoded data is augmented with additional data (e.g., redundant symbols, or parity bits), for recovering degraded or otherwise lost data, as may occur due to defects or other lossy process associated with the encoding process.

A popular error correction coding scheme, also denoted as ECC scheme, particularly used in optical disk error correction, is known as Reed-Solomon (RS) codes. Generally, in RS codes, for every k input symbols (e.g., a certain number of bits to be encoded), the RS code adds a certain amount of symbols p, called redundant symbols, to yield a total number, n=p+k, of symbols for every k input symbols encoded during a recoding/writing process. During readout of the disk, an RS decoder executing error correction decoding utilizes the redundant symbols to recover those input symbols (e.g., k symbols) that may have been lost due to errors.

In general, the ability of an RS decoder to correct errors in an RS encoded symbol is limited to (n-k)/2. In other words, the addition of a number p of redundant symbols during the encoding process allows to correct only p/2 erroneous symbols. Notably, this relation holds in the most general case, where the number and position of erroneous symbols is not known. However, for those erroneous symbols whose locations on the storage medium, i.e., disk, are known in advance, the error correction ability of the RS decoder can be increased twofold, namely, the code can correct n-k symbols. Erroneous symbols at known positions are widely denoted as "erasures".

Hence, it would be desirable to employ as part of decoding process a method and system for determining the location of erroneous data, i.e., erasures.

U.S. Patent Application Publication No. US 2005/0229069 to Hassner et al., purports to disclose techniques for detecting and correcting burst errors in data bytes formed in a two-level block code structure. The reference further discloses a second level decoder which uses block level check bytes to detect columns in a two-level block code structure that contain error bytes. The second level decoder generates erasure pointers that identify columns in the two-level block structure effected by burst errors. A first level decoder then uses codeword check bytes to correct all of the bytes in the columns identified by the erasure pointers. As further disclosed by the reference, the first level decoder is freed to use all of the codeword check bytes only for error byte value calculations. The first level decoder does not need to use any of the codeword check bytes for error location calculations, because the erasure pointers generated by the second level decoder provide all of the necessary error locations. Such techniques double the error correction capability of the first level decoder.

U. S. Patent Publication No. US 4,835,772 to Peile et al., purports to disclose a probabilistic fade forecasting method, where a block of helically interleaved codewords is received in a de-interleaving array. Further, a succession of codewords obtained from the de-interleaving array are decoded in a process in which each error pattern in a given codeword position provides a prediction of the presence or absence of an erasure in the adjacent codeword position of the next codeword. The reference further discloses that this prediction is obtained by addressing a look-up table with the error pattern.

A method and system for further improving error correction code decoding is desirable.

A method for reading data from a storage medium is set forth in claim 1. The method includes detecting an error at a first location on the storage medium. The method further includes deriving from the first location, information relating to a second location on the storage medium, where the second location is physically close and logically distant from the first location. Accordingly, such information related to the second location is ultimately converted into erasure information. The method then utilizes the erasure information during error correction decoding of the storage medium.

In one exemplary embodiment, the information on the storage medium is addressed by unique scalar addresses, where the first location corresponds to a first address on the storage medium, the second location corresponds to a second address on the storage medium. The second location being physically close and logically distant from the first location is characterized by the existence of an interim location corresponding to an interim address on the storage medium; where the interim address is numerically between the first address and the second address, whereas the associated physical location is such that the physical distance between the interim location and the first location is larger than the physical distance between the second location and the first location.

In exemplary embodiments, the storage medium comprises the information in a spiral-shaped track. A physically close but logically distant second location in this case means, that the second location is located substantially one or more integer spiral turns away from the first location, but at the same or a similar angular position. Alternatively, a storage medium may comprise information in multiple concentric circular tracks. Then a physically close but logically distant second location is at substantially the same angular position as the first location, but on a neighboring track relative to the first location. In still other exemplary embodiments, an optical storage medium may comprise information in two or more layers. In this case, a second location is physically close and logically distant from a first location, if the second location is substantially at the same angular and radial position than the first location, and the second location is in a different layer than the first location.

Another exemplary embodiment of the present invention provides a system for reading data from a storage medium. The system includes a drive adapted to receive a storage medium, and a processor coupled to the drive. The processor is adapted to detect an error at a first location on the storage medium, and to derive, from the first location, an information relating to a second location on the storage medium where the second location is physically close and logically distant from the first location. The processor is further adapted to convert the information relating to the second location into erasure information, and to employ that erasure information for the reading of data at the second location.

A preferred embodiment of the present invention is described with reference to the accompanying drawings. The preferred embodiment merely exemplifies the invention. Plural possible modifications are apparent to the skilled person. The gist and scope of the present invention is defined in the appended claims of the present application.

**Fig. 1** is a block diagram of a system for reading storage media, in accordance with an embodiment of the present invention.

**Fig. 2** is a top view of a disk-shaped storage medium carrying a spiral recording track, in accordance with an embodiment of the present invention.

**Fig. 3** is a top view of another spiral recording track on a disk-shaped storage medium, in accordance with an embodiment of the present invention.

**Fig. 4** is a block diagram of a process flow for reading data from a disk-shaped storage medium, in accordance with an embodiment of the present invention.

**Fig. 5** is a side view of a multilayered optical disk, in accordance with an embodiment of the present invention.

**Fig. 6** is a side view of a multilayered optical disk carrying data blocks in several of its layers, in accordance with an exemplary embodiment of the present invention.

**Fig. 7** is a block diagram of another process flow for reading data from a disk-shaped storage medium, in accordance with an embodiment of the present invention.

**Fig. 8** is a block diagram of yet another process flow for reading data from a disk-shaped storage medium, in accordance with an embodiment of the present invention.

Disclosed embodiments of the present technique relate to methods and systems for determining location of error bits on disk-shaped storage media used for storing digital data, like audio, video, or computer data, etc. Such a storage medium, if it is of optical type, may for example be a compact disk (CD) used to store music files and/or computer software, or a digital video disk, used for storing, movies, pictures and the like. Exemplary embodiments of the present invention may also apply to single layered or multilayered optical disks, where data can be stored within each of the multiple stacked layers of the disk.

Accordingly, the below discussion describes a system and method for detecting error bits, as may be performed during disk readout. Such erroneous bits may arise due to defects caused by dust, fingerprints and/or other defects disposed about the surface. Because the storage of data within a disk may typically be done along a spiral path or along concentric curves forming the disk, initially detected error bits or those bits whose location is known in advance can provide location information on additional secondary error bits disposed at different data blocks comprising the disk data. While the local nature of defects acquired by the disk may render the physical locations of the initial and secondary errors as proximate, the "logical distance" between such errors may in fact be very distant insofar as no logical link may exist between logical addresses of the two physically proximate errors. As will be described further below, in a first step, from a known physical proximity between two data blocks situated on neighboring tracks or layers, together with an absolute radius information, a logical distance in the sense oof difference of addresses between such data blocks, which may actually be quite large, can be determined. In a subsequent second step then, knowing that a first one of the data blocks is erroneous, and knowing that a physical defect is likely to extend to physically neighboring blocks as well, together with knowing the logical distance of a complete track revolution at the current position as derived in the first step, allows one to generate an erasure information for the second one of the neighboring blocks.

Location information of error bits, also known as erasure information, is further utilized by an error correction code (ECC) decoder for recovering bits that may have been lost or otherwise compromised due to defects or other encoding errors. Thus, knowing the location of error bits in advance, erasure information can become more readily available to the ECC decoder during disk readout. Moreover, the technical effect of the invention is to provide ECC decoding having an ability to detect burst errors with high probability and, thus, maximize correctable burst error lengths for providing a more efficient and speedy data decoding process.

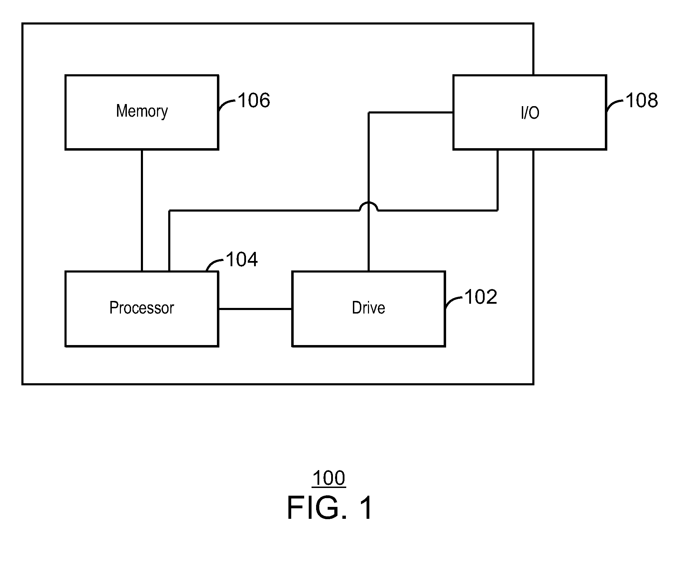

**Fig. 1** is a block diagram of a system **100** for reading data from a storage medium, in accordance with an embodiment of the present technique. The system **100** may be, for example, a personal computer, abbreviated PC herein, a CD player, a DVD player/recorder, a Blue Ray player, a set-top box, such as a cable box, and other devices adapted to play or record digital information. Accordingly, the system **100** includes a drive **102** coupled to a processor **104,** which in turn is coupled to a memory **106**. The drive **102** is adapted to receive a disk-shaped storage medium, adapted for storing and playing back digital data.

The disk drive **102** may be adapted to receive optical disks of various sizes and/or various types. For example, the drive may be adapted to receive a 12 centimeter disk, 7.6 cm disk and/or a 30 cm disk. Such optical disks may support a wide variety of recording type formats, such as read-only CDs or CD-ROMs, recordable write-once media such as CD-R, and/or re-recordable or rewritable media such as CD-RW to name just a few examples. Further, the disk drive 102 may be adapted to receive single layered disks and/or multi-layer disks, such as those having a greater capacity for storing large amounts of data. While the process of obtaining erasure information from multi-layered disks may be somewhat different from that used in single layered disks, those skilled in the art will appreciate that the methods described herein are applicable to both and/or other types of optical disks. The disk drive **102** may alternatively be adapted to receive magnetic disks of various sizes.

As illustrated by **Fig. 1,** the disk drive **102** forms an internal part of the system **100,** where the drive **102** couples directly to the processor **104**. However, rather than being an internal component, the disk drive **102** may couple to the system **100** as an external device. In such a case, the drive **102** may couple to the processor **104** via an input/output (I/O) interface **108.**

As will be described further below, during data decoding from a disk-shaped storage medium, erasure information is obtained while the disk is scanned within the drive **102**. A decoder may be implemented via software and/or hardware components, both of which may be supported by the processor **104** and the memory **106**. The processor **104** may form a regular processor, such as those found in PCs, servers and the like, or the processor **104** may be custom-designed to carry out and execute special ECC instructions as, for example, may be done via field programmable gate arrays also denoted as FPGAs. The memory device **106** may form an internal or external memory, such as a PC hard-drive. Hence, the memory device may be a magnetic memory device, a solid-state flash memory device, and optical memory device, or a combination thereof.

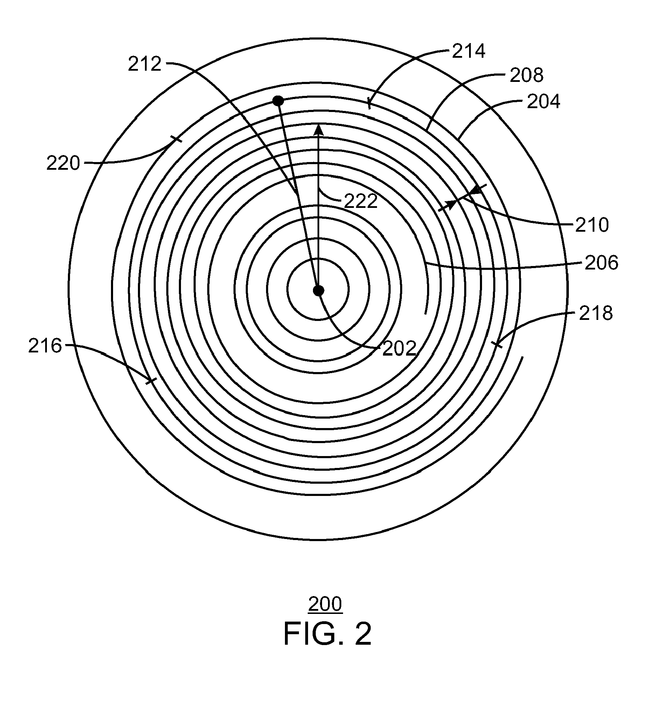

**Fig. 2** is a top view of a disk-shaped storage medium **200** carrying a spiral recording track, in accordance with an embodiment of the present technique. Note that, for illustrative purposes, **Fig. 2** shows the spiral slope and the radial distance of neighboring tracks in a strongly exaggerated form. The disk-shaped storage medium **200** has a center **202,** as well as a spiral track comprising several track turns **204, 206** and **208** at different radii, and is wound about the center **202**. It should be borne in mind that the shown track is exemplary and that the disk **200** includes a multitude of track turns similar to those described above. Other embodiments of disk-shaped storage medium may have other types of curved tracks, such as concentric circles or other non concentric curves. The storage medium **200,** if it is of optical type, may be made up of various polycarbonate layers and other photosensitive materials, such as those sensitive to laser light, for encoding data thereon. The amount of data and, thus, the storage capacity of the disk **200** may be determined in part by the number of track turns **204-208** that the disk **200** contains. In other words, the storage capacity is determined by the track density within the disk **200,** which in turn is determined by the spacing distance existing between adjacent track turns, also known as track pitch **210.** Hence, the smaller the track pitch **210,** the greater the storage capacity of the disk **200** becomes.

Generally, digital information on rutating storage media, such as the disk **200,** is sectioned into data blocks adapted for storing a certain amount of data. Each data block occupies a certain part of the track length, and Fig. 2 illustrates this by showing several consecutiveblock boundaries **214, 216, 218,** and **220.** For simplifying the following explanations, we assume in the following, without loss of generality, that the spiral track is being scanned from inside to outside, i.e. from smaller radius to larger radius positions. With the track layout as shown in Fig. 2, this amounts to a counterclockwise scanning of the track. Also for ease of explanation, it is assumed in the following without loss of generality, that the track on the storage medium is being accessed at so-called "Constant Linear velocity" also denoted as CLV. For example, a data block for which we randomly assume a label N (where the label N, N+1... of data blocks shall indicate their sequential placement on the spiral curve of the track) may extend on the track up to block boundary **214,** while a data block N+1 may extend between block boundary **214** and block boundary **216.** Similarly, data block N+2 extends between block boundary **216** and block boundary **220.** Accordingly, when writing on or otherwise retrieving data from the disk **200,** the consecutive data blocks provide a map/path for serially storing data on or retrieving data from the disk **200.** For example, during disk readout, block N may be read before block N+1, which in turn may be read before block N+2 and so forth. In addition, each of the consecutive data blocks typically includes a data block address adapted to identify the location of the data block in relation to the other data blocks stored on the disk **200.** Hence, to ultimately acquire erasure information, i.e., the spatial position of error bits within the spiral curve of the disk, it is desirable to correlate the addresses of data blocks, as illustrated by the block boundaries **214, 216, 218, 220** with their respective positions along the track turns **204, 206, 208.**

To determine the actual location of each block within the spiral curve on the disk **200,** it is desirable to obtain a mathematical description for a length of an arc disposed between two radii extending from the center **202** of the disk **200.** The arc length of such a curve is given by the following approximate mathematical expression:

$$ s = \frac{\pi}{tp} \left( r_2^{\,2} - r_1^{\,2} \right) \qquad\qquad \text{(Equation 1)} $$

In Equation 1, the term "s" is the arc length of a linear spiral curve extending between a first radius $r_1$ and a second radius $r_2$, and "tp" denotes the track pitch **210.** Those skilled in the art will appreciate that during disk readout a servo of the disk drive controlling the tracking of the disk can provide necessary information from which parameters in Equation 1 can be obtained.

In the following, it will be considered that data blocks are constituted as so-called ECC blocks. This is motivated from the fact that, on disk-shaped stoprage media employing a block-wise ECC, an ECC block is the smallest data unit that can be read or written to/from disk independently. However, it must be understood all through the following, that for anything other than reading itself or writing itself, like the considerations with respect to error location, error address, error position, can conceptually be applied for units of any size, like ECC block, data block, byte or bit.

By knowing the arc length "s" from Equation 1, and by knowing the physical length of each ECC block, a parameter, termed EEC offset, used for measuring the distance from one ECC block address to an adjacent ECC block address can be calculated. This offset is given by the following mathematical expression:

$$ ECCOffset = \frac{s}{ECCBlockLength} \qquad\qquad \text{(Equation 2)} $$

With other words: The term ECCOffset describes the arc length of a piece of the track spiral starting at a radius r1 and ending at a radius r2, measured in multiples of a predetermined ECCBlockLength. The term "ECCBlockLength" in Equation 2 is simply a length of each ECC block along the spiral curve of the disk **200.** Note that the ECC offset given by Equation 2 determines an initial offset from the fractional part of which also the addresses of data blocks within the ECC blocks can be obtained. Using Equation 2, and knowing the arc length s that corresponds to one complete track revolution at a current position, the address of a future ECC block one the same radial line can be computed using a current address. as given by the following mathematical expression:

$$ECCAddress_2 = ECCAddress_1 + ECCOffset \qquad \text{(Equation 3)}$$

As an example, using the ECC block address of the block starting at boundary **214** as a starting point, and progressing on the spiral track by one complete track turn, one arrives at an ECC block address that denotes the ECC block that ends at block boundary **220**. Neighboring blocks, in a sense of blocks on neighboring tracks having no angular separation and thus minimal spatial separation, nevertheless have a large logical separation, because logically, i.e. in a sense of linearly progressing block address, the distance between such blocks is equivalent to an entire circumference or revolution at the location of the particular spiral turn that connects the two blocks.

In applying Equation 3, even for the case where the erasure information is available only at ECC block granularity, it is advantageous to use ECCAddress1 and ECCOffset with sub-integer accuracy. Only then will those cases be correctly taken into account, where for a very long ECCBlockLength covering slightly more than an entire revolution of the track spiral, the new address as calculated by equation 3 actually falls within the same ECC block where the first error 302 was situated. Similarly but with the opposite effect, when the ECCBlockLength happens to be slightly less than one revolution of the track spiral at the momentary radius, and in case the first error **302** is situated near the end of the first ECC block, using Equation 3 with sub-integer parameters will correctly reflect the fact that the potential erasure then actually falls within the next-next ECC block.

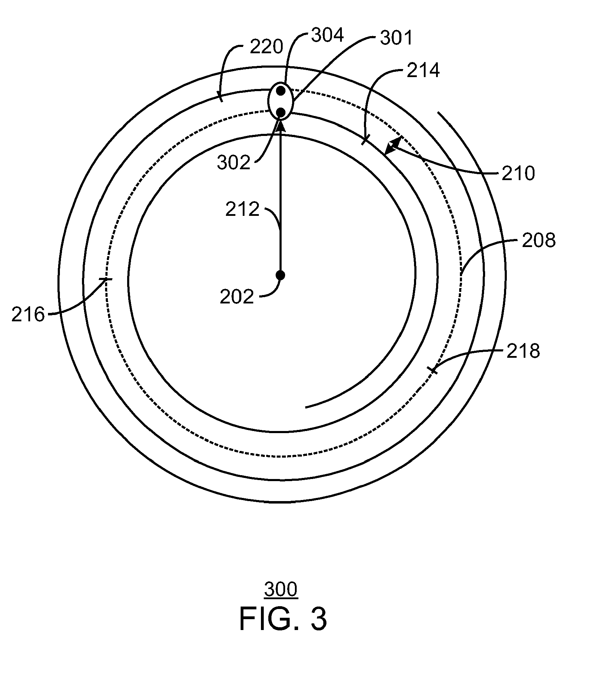

**Fig. 3** is a top view of another spiral track on a disk-shaped storage medium **300,** in accordance with an embodiment of the present invention. As illustrated, the disk **300** is similar to the above disk **200** of **Fig. 2,** in that it includes the center **202** and several track turns having the track pitch **210**. The disk **300** also includes ECC blocks starting at block boundaries **214, 216, 218, 220.** As illustrated, the ECC blocks extend throughout the disk, such that the block starting at block boundary **214** extends to block boundary **216,** the block starting at block boundary **216** extends to block boundary **218,** and so on.

In accordance with an embodiment of the present invention, the disk **300** includes a defect **301** giving rise to errors as indicated by reference numerals **302** and **304.** As shown, a first error **302** is assumed to lie in a part of the track between the block boundaries **214** and **216;** and a second error **304,** physically close to the first error **302,** is assumed to lie in a part of the track between the block boundaries **218** and **220.** As shown, the first and second error are close enough such that they are considered to be on the same radial line **212.** The second error **304** can be seen to be substantially one integer spiral turn away from the first error **302.** With other words, the second error **304** is located on a track neighboring that on which the first error **302** is located, namely in such a way that both of the errors **302** and **304** have the same angular position on the disk **200.** Hence, while the spatial separation between the errors **302** and **304** may be quite small, the address difference between the erroneous blocks may be quite large. Thus, while the blocks including the errors **302** and **304** may not form adjacent ECC blocks, the above mathematical expressions, as given by Equations 1-3, provide relations between ECC addresses of these data blocks which will be termed in the following to be spatially close but logically distant.

More specifically, if during the read out of the disk **300** the first error **302** is detected, then a reasonable probability exists that other errors may exist in the spatial vicinity of where the first error **302** is disposed. With other words, a second error **304** may exist, located physically close to the first error **302.** Thus, by first detecting the first error **302** at its illustrated location, the Equation 3 can be utilized to obtain additional erasure information relating to the potential second error position **304.** By further example, if the first error **302** is detected in an ECC block starting at boundary **214,** by the disclosed method Equation 3 can be used to give the ECC block address of the second error **304** in accordance with its illustrated position, that is, two ECC blocks away from the block in which error **302** is disposed, i.e., in the ECC block starting at block boundary **218.**

Notably, in the track path leading from the location of the first error **302** to the location of the second error **304,** block boundaries **216** and **218** are surpassed. Both these block boundaries, as well as any location between them, can be considered as interim locations between **302** and **304;** and due to the spiral track type, the physical distance between the first error **302** and the interim locations is bigger than the physical distance between **302** and **304.** With other words, the property of the first error **302** and the second error **304,** namely to be physically close and logically distant, can equivalently be described by the existence of an interim location, the logical address of which lies between the logical address of the first error **302** and the logical address of the second error **304;** while physically, it is farther apart from the first error **302** than the second error **304** is from the first error **302.**

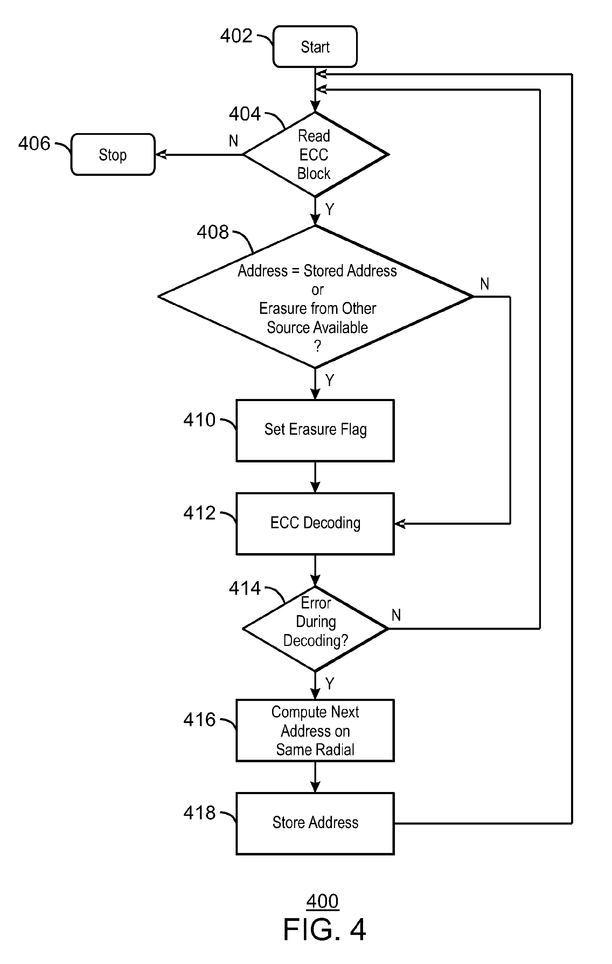

**Fig. 4** is a symbolic illustration **400** of a process flow for reading data from a disk-shaped storage medium in accordance with an embodiment of the present technique. The process flow describes processing steps performed during disk readout for obtaining erasure information, as described above with reference to **Figs. 2 and 3.** Accordingly, the process flow **400** begins at a step **402** from where the process flow advances to a decision step **404** for determining whether the disk can in fact be readout. For example, should the disk be damaged or data contained therein be otherwise badly corrupted, the process flow proceeds to step **406,** prompting the disk readout to terminate. However, for a readable disk, the step **404** begins a readout operation of an ECC block contained within the disk.

Thereafter, the process flow proceeds to a decision step **408** for determining whether the ECC block read in the previous step has an address already stored as one being associated with an error or one which has been previously flagged by the ECC decoder and the like. For example, if the ECC block is read for the first time, or not associated with nor derived from a previously occurring error, such as the error **302** of **Fig. 3,** the process proceeds to step **412** as illustrated. On the other hand, if the ECC block evaluated at decision step **404** is stored as a data block associated with a previously occurring error or being associated with other errors occurring within the disk, the process flow proceeds to step **410.** Again, it should be borne in mind that the erasure information stored at step **408** may originate from previously detected erasures, as derived by Equation 3, or it may be supplied via external or other sources adapted for obtaining erasure information for the scanned disk.

Hence, for those ECC blocks for which erasure information is already stored, or whose address has been stored as being one associated with the existence of erasures, as may be detected in the previous step, an erasure flag is set so as to indicate that such blocks may potentially contain errors or may otherwise be corrupt. Thereafter, the process flow proceeds to step **412** where ECC decoding of the ECC block is performed. Such decoding may be implemented by an ECC decoder, as implemented by a processor or a similar device.

During the ECC decoding **412** of the block, the available erasure information is used to the maximum extent possible. In this, it must be taken into account that the granularity of the erasure information may vary, as explained in the following.

On a very coarse level, detecting an erasure while decoding the first ECC block - i.e. that ECC block which comprises the first error **302 -** may be detected at ECC block granularity. In this case, application of the above formulae will result in indicating a certain other ECC block, namely that ECC block which comprises the location **304,** as potentially containing an erasure. Any further information, about where in particular within the ECC block the erasure is to be expected, is absent in this case. In this particular case, the erasure information may not be usable advantageously, at least not for the ECC decoding of the other ECC block.

On a more advanced, less coarse level, detecting an erasure while decoding the first ECC block may be detected at block granularity. In this case, the erasure information is of such a nature, that it indicates one or more of the blocks within the other ECC block as potentially containing an erasure. This can advantageously be taken into account during the ECC decoding of the other ECC block.

Similarly, on an even more detailed level, detecting an erasure while decoding the first ECC block may also be detected at byte granularity. In this case, the erasure information is of such a nature, that it indicates one or more of the bytes within one or more of the blocks within the other ECC block as potentially containing an erasure. This, too, can advantageously be taken into account during the ECC decoding of the other ECC block.

From the ECC decoding step **412,** the process flow **400** proceeds to step **414** for determining whether the ECC decoding performed in the previous step was successful. That is, step **414** determines whether errors were detected within the ECC block that is being readout. Hence, if no errors are detected, the process flow returns to step **404,** where the process begins to read a subsequent ECC block. However, if at step **414** errors are found to be present, the process proceeds to step **416.**

At step **416,** the process flow **400** computes a next address disposed on the same radial line on which the error in the previous step, i.e., step **414,** was detected. Essentially, step **416** utilizes Equation 3 for determining ECC addresses of those ECC blocks disposed in the vicinity of the previously detected error, as performed with respect to the error **304** of **Fig. 3.** Finally, at step **418,** the process flow **400** stores the aforementioned address generated in step **416,** so that such information may later facilitate the efficient readout of the disk.

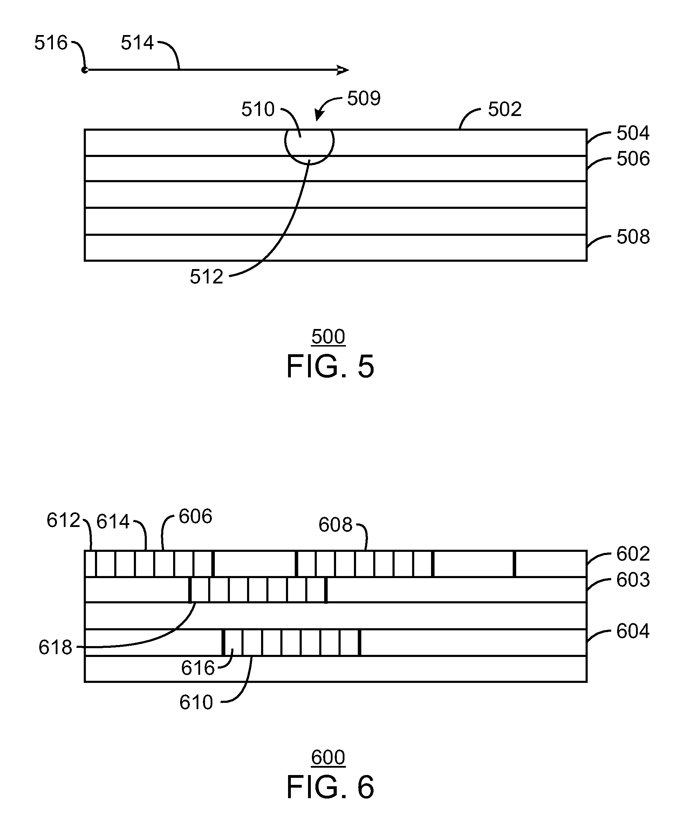

**Fig. 5** is a side view of an optical disk **500,** in accordance with another embodiment of the present technique. The optical disk **500** may be a standard optical disk for storing digital data, and may be similar to an optical embodiment of the disks **200** and/or **300** shown in **Figs. 2 and 3,** respectively, in that the disk **500** may have various sizes and/or may comprise various types for storing different formats. In this embodiment, the disk **500** is a multi-layer disk. Accordingly, the disk **500** includes a top surface **502,** as well as multiple layers noted by reference numerals **504, 506** and **508,** where the layer **504** is the top most layer and layer **508** is the bottom most layer.

By virtue of having multiple layers, the disk **500** has a capacity for storing large amounts of data. Nevertheless it is realistic to assume that a convention exists for such a multilayer disk that defines a single, linear address range. In a multilayer disk, local or superficial defects may actually traverse through the multiple layers of the disk. In an exemplary embodiment, errors arising from a defect **509** extending through one or more layers of the disk **500** are illustrated by errors **510** and **512.** In these, the error **510** is assumed to be situated in layer **504,** and the error **512** is assumed to be - at least partly - situated in layer **506.** While both of the aforementioned errors are situated in different layers, both are located at a similar radial position **514** extending from the center **516** of the disk **500,** as well as at a similar angular position.

Hence, upon detection of the error **510** found on layer 504, methods similar to those described above may be applied for determining the ECC address of the error **512.** In other words, by knowing the location of the error **510,** and by knowing the momentary radius and angular position at which readout is being performed, spatial correlation can be found to additional layers in the vicinity of the error **510** having errors as well. Again, it should borne in mind that while the errors **510** and **512** may be physically close, by virtue of being disposed in different layers, the data blocks containing those errors may logically be quite distant.

**Fig. 6** is a side view of a multilayered optical disk **600** carrying blocks in several of its layers, in accordance with an embodiment of the present invention. Specifically, the shown data blocks may form a portion or a subset of multiple ECC data blocks disposed on the disk. It should be borne in mind that the illustration portrayed by **Fig. 6** forms a symbolic and/or a conceptual rather than an exact spatial arraignment of data blocks, sectors and/or symbols contained within a disk. The multilayer optical disk **600** may be made up of multiple layers **602, 603,** and **604,** and it is assumed in the following without loss of generality that each of these layers carries data of one ECC block, some of which may be contiguous with one another and some which may be separate, as those discussed above with reference to **Figs 2 and 3.** Further, each of the ECC blocks **602, 603, 604** is made up of multiple sectors. For example, the ECC block **602** is assumed to include sectors **606** and **608,** while the ECC block **604** is assumed to include a sector **610.** In addition, each sector contained within the various ECC blocks of the disk **600** may be made of individual symbols. By further example, the sector **606** may contain symbols **612** and **614,** and the sector **610** may contain a symbol **616,** as well as other symbols. The data structures forming the data blocks **600** may generally include but may not be limited to data structures existing in DVDs and the like, where an ECC block comprises 16 sectors, each of which may include 2048 symbols.

In accordance with an embodiment of the present invention, erasure information can be obtained if, for example, during disk readout, errors arising from local defects are detected within one or more ECC data blocks. Then sectors or a range of sectors contiguous to such ECC blocks may be flagged as potentially having errors as well. In the illustrated embodiment, if the sectors **616** and **618** of the ECC data blocks **603** and **604,** respectively, are contiguous to the data block **602,** which is initially detected as having errors, then the aforementioned sectors could, too, be rendered as having errors. Alternatively, if errors are initially detected within the sector **618** of ECC block **603,** then additional erasure information can be obtained by flagging the closest data block, such as the ECC block **604,** for potentially having errors as well.

In other exemplary embodiments, rather than basing erasure information on sectors or symbols, methods similar to those described herein can applied for obtaining erasure information based even more refined levels of data structures, such as bytes and/or bits contained within symbols. Obtaining erasure information from such refined addresses may be advantageous as it may increase the accuracy of ECC decoding of a disk.

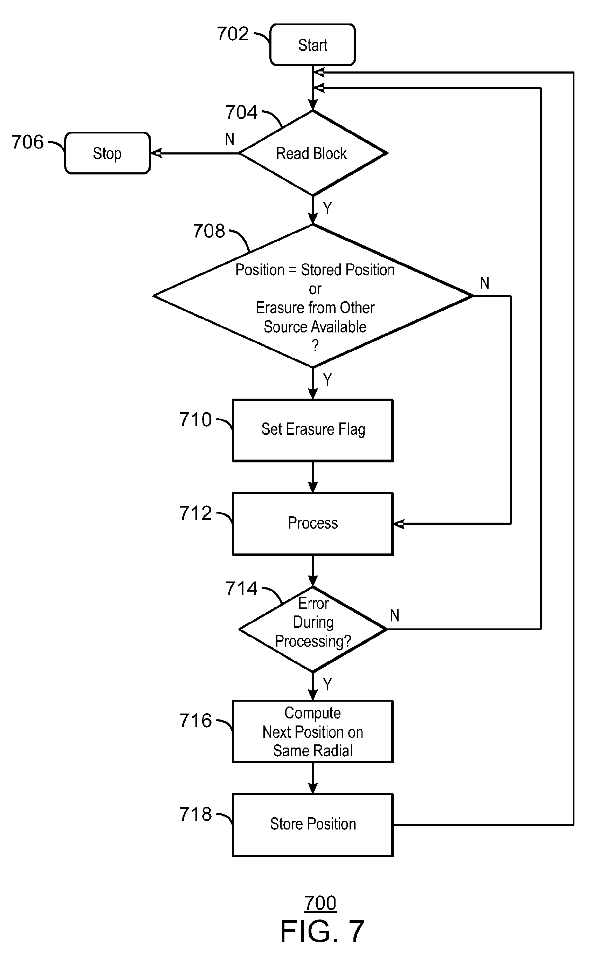

**Fig. 7** symbolically illustrates a process flow **700** for block based data reading, in accordance with an embodiment of the present technique. The process flow describes processing steps performed during disk readout for obtaining erasure information based on previously located or otherwise correlated addresses, such as sectors and symbols, having errors within the disk.

Accordingly, the process flow **700** begins at step **702** from where the process flow advances to decision step **704** for determining whether the disk can in fact be readout. For example, should a significant number of the data sectors and/or symbols within the disk be erroneous because of mechanical damage or other causes, the process flow proceeds to step **706,** prompting the disk readout to terminate. However, if the disk is readable, step **704** begins reading the disk by evaluating an ECC block. Thereafter, the process flow proceeds to decision step **708** for determining whether the ECC block read in the previous step has a position already stored as one being associated with an error. For example, if the ECC block is read for the first time and is one not derived from or associated with a previously occurring error, such as the error **302** of **Fig. 3,** then the process proceeds to step **712** as illustrated. On the other hand, if the ECC block evaluated at decision step **704** is stored as a position of an ECC block associated with a previously occurring error, or is one associated with other errors occurring in the disk, then the process flow proceeds to step **710.** An ECC block whose stored position is noted at step **708** may include the ECC address of that block, as well as the sector numbers and/or the symbols within the ECC data block containing the errors.

Hence, for those ECC blocks for which erasure information or location is stored, as detected by the previous step, an erasure flag is set so as to indicate that such blocks may potentially contain errors or otherwise be corrupt. Thereafter, the process flow proceeds to step **712** where processing of the ECC block is performed. From step **712,** the process flow **700** proceeds to step **714** for determining whether the processing of the ECC block performed in the previous step was successful. Hence, if no errors were detected, the process flow returns to step **704,** where a subsequent ECC block is read. However, should errors be present within the ECC block, as determined by the decision step **714,** the process proceeds to step **716.**

At step **716,** the process flow **700** computes a next position on the same radial line, for example, of an ECC block, symbol, or sector, that are spatially close to those errors identified in the previous step, i.e., step **714.** Essentially, step **716** utilizes spatial correlations for ascertaining an address of other ECC blocks sectors and/or symbols containing errors. Finally, at step **718,** the process flow **700** stores the aforementioned locations of the sector and/or symbols of the ECC data blocks previously obtained at step **716.**

Generally, the erasure information, as obtained via the above discussed methods, is thereafter stored so that it can be retrieved during subsequent readouts of the disk. Hence, by storing the erasure information obtained based on previously detected errors, for example, as performed by Equation 3 for locating ECC block addresses, a subsequent disk readout can be made more efficient using the already available erasure information.

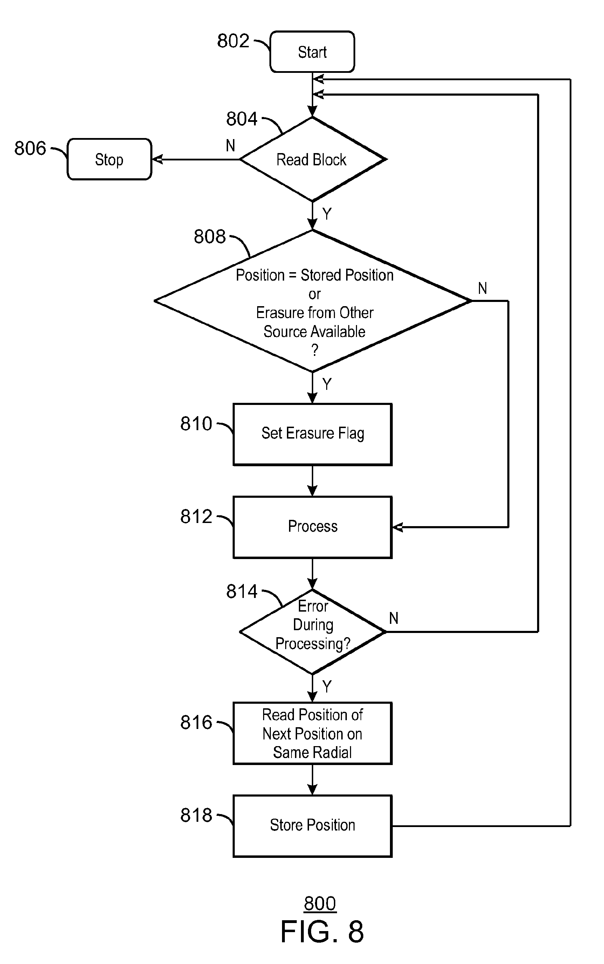

Accordingly, **Fig. 8** symbolically illustrates a process flow **800** for reading erasure information of a disk. The process flow **800** begins at step **802.** Thereafter, the process flow advances to decision step **804** for determining whether the disk is a readable one. Indeed, should the disk drive malfunction, or if the disk be damaged or is otherwise unreadable, the process flow proceeds to step **806,** prompting the disk readout to terminate. However, if the disk is readable, step **804** begins reading the disk for its data blocks. Thereafter, the process flow proceeds to decision step **708** for determining whether the ECC block read in the previous step has a position, already stored, as being associated with a previously detected error. For example, if the ECC block is read for the first time and is one not derived from or associated with a previously occurring error, such as the error **302** of **Fig 3,** then the process flow proceeds to step **812.** By contrast, if the ECC block evaluated at decision step **804** is stored as a position that of an ECC block associated with a previously occurring error, or that being associated with other errors occurring in the disk, then the process flow proceeds to step **810.**

Hence, for those ECC blocks for which erasure information, i.e., location, is stored, as detected by the previous step, an erasure flag is set so as to indicate that such blocks may potentially contain errors. Thereafter, the process flow proceeds to step **812** to further process the data block. From step **812** the process flow **800** proceeds to step **814** for determining whether the processing of the data block performed in the previous step was successful. That is, step **814** determines whether errors were detected within the read data block. Hence, if no error were detected, the process flow returns to step **804,** where a subsequent data block is read and subsequent processing similar to that discussed above ensues. However, should errors be present within the read block, as determined by decision step **814,** the process proceeds to step **816.**

At step **816,** the process flow **800** reads a next position on the same radial line, for example, of an ECC block, row, or symbol, on which the error in the previous step, i.e., step **814,** was detected. Essentially, step **816** utilizes the spatial correlation between proximate locations of rows, and/or symbols of ECC data blocks to obtain additional erasure information on the ECC data blocks that are spatially proximate to the error detected at step **814.** Finally, at step **818,** the process flow **800** stores the aforementioned locations of the rows and/or symbols of the ECC data blocks previously obtained at step **816,** so that such information may further facilitate the efficient readout of the disk.

**Claims**

1. A method **(400)** for reading data from a storage medium that carries digital information in at least one layer, the method comprising:

   detecting **(414)** an error at a first location on the storage medium;
   deriving **(416),** from the first location, an information relating to a second
   location on the storage medium, the second location being physically close and logically distant from the first location;
   converting **(418)** the information relating to the second location into
   erasure information; and
   utilizing **(408)** the erasure information during error correction decoding of
   the storage medium.

2. The method **(400)** according to claim 1, wherein the information on the storage medium is addressed by unique scalar addresses, the first location corresponds to a first address on the storage medium, the second location corresponds to a second address on the storage medium, and wherein being physically close and logically distant from the first location is **characterized by** the existence of an interim location corresponding to an interim address on the storage medium, where the interim address is between the first address and the second address, and where the physical distance between the interim location and the first location is larger than the physical distance between the second location and the first location.

3. The method **(400)** according to claim 1 or claim 2, applied in case the storage medium comprises the information in a spiral-shaped track, wherein the second location is located substantially one or more integer spiral turns away from the first location.

4. The method **(400)** according to claim 1 or claim 2, applied in case the storage medium comprises the information in multiple concentric circular tracks, wherein the second location is at substantially the same angular position than the first location, and wherein the second location is on a neighboring track relative to the first location.

5. The method **(400)** according to claim 1 or claim 2, wherein the storage medium is of optical type and comprises the information in two or more layers , wherein the second location is substantially at the same angular and radial position than the first location, and wherein the second location is in a different layer than the first location.

6. The method **(400)** according to claim 2, wherein the first address is described by one of an ECC block number, a sector number, and a byte number.

7. The method **(400)** according to claim 2, wherein the second address is described by one of an ECC block number, a sector number, and a byte number.

8. The method **(400)** according to any one of the previous claims, comprising storing the erasure information so that it can be retrieved during readout of the storage medium.

9. A system **(100)** for reading data from a storage medium, comprising:

   a drive **(102)** adapted to receive a storage medium;
   a processor **(104)** coupled to the drive, wherein the processor is adapted
   to detect an error at a first location on the storage medium, to derive, from the first location, an information relating to a second location on the storage medium, the second location being physically close and logically distant from the first location, to convert the information relating to the second location into an erasure information; and to utilize the erasure information during error correction decoding of the storage medium.

| Memory | 106 |
| Processor | 104 |
| Drive | 102 |
| I/O | 108 |

100
FIG. 1

200
FIG. 2

300
FIG. 3

402 — Start

404 — Read ECC Block

406 — Stop (N)

Y

408 — Address = Stored Address or Erasure from Other Source Available ? (N)

Y

410 — Set Erasure Flag

412 — ECC Decoding

414 — Error During Decoding? (N)

Y

416 — Compute Next Address on Same Radial

418 — Store Address

400

FIG. 4

500
FIG. 5

600
FIG. 6

702 — Start

704 — Read Block

N → 706 — Stop

Y

708 — Position = Stored Position
or
Erasure from Other
Source Available
?

N

Y

710 — Set Erasure Flag

712 — Process

714 — Error
During
Processing?

N

Y

716 — Compute
Next Position on
Same Radial

718 — Store Position

700
## FIG. 7

802 — Start

804 — Read Block

N → 806 — Stop

Y

808 — Position = Stored Position
or
Erasure from Other
Source Available
?

N

Y

810 — Set Erasure Flag

812 — Process

814 — Error
During
Processing?

N

Y

816 — Read Position of
Next Position on
Same Radial

818 — Store Position

800

FIG. 8

Europäisches
Patentamt

European
Patent Office

Office européen
des brevets

## EUROPEAN SEARCH REPORT

Application Number

EP 11 30 6755

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 62 236185 A (SONY CORP) 16 October 1987 (1987-10-16) * the whole document * ----- | 1-9 | INV. G11B20/18 |
| A | US 2004/078746 A1 (TANAKA HISAE [JP] ET AL) 22 April 2004 (2004-04-22) * abstract * * paragraphs [0116] - [0171] * * figures 1,7-12 * ----- | 1,9 | |
| A | JP 2009 231898 A (FUJITSU MICROELECTRONICS LTD) 8 October 2009 (2009-10-08) * abstract * ----- | 1,9 | |

TECHNICAL FIELDS
SEARCHED       (IPC)

G11B

The present search report has been drawn up for all claims

| Place of search | Date of completion of the search | Examiner |
|---|---|---|
| Munich | 2 May 2012 | Sucher, Ralph |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...........................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 11 30 6755

This annex lists the patent family members relating to the patent documents cited in the above-mentioned European search report.
The members are as contained in the European Patent Office EDP file on
The European Patent Office is in no way liable for these particulars which are merely given for the purpose of information.

02-05-2012

| Patent document cited in search report | | Publication date | Patent family member(s) | | Publication date |
|---|---|---|---|---|---|
| JP 62236185 | A | 16-10-1987 | JP | 2000269 C | 08-12-1995 |
| | | | JP | 7024148 B | 15-03-1995 |
| | | | JP | 62236185 A | 16-10-1987 |
| US 2004078746 | A1 | 22-04-2004 | US | 2004078746 A1 | 22-04-2004 |
| | | | US | 2007204188 A1 | 30-08-2007 |
| JP 2009231898 | A | 08-10-2009 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050229069 A, Hassner

- US 4835772 A, Peile